# EUROPÄISCHE PATENTSCHRIFT

(11) **EP 1 184 345 B1**
(45) Veröffentlichungstag und Bekanntmachung des Hinweises auf die Patenterteilung: **21.03.2007**
(21) Anmeldenummer: 01121007.7
(22) Anmeldetag: 31.08.2001
(51) Int. Cl.: C03B 5/225

(54) **Verfahren zur Unterdrückung der Sauerstoffblasenbildung in Glasschmelzen, eine Vorrichtung hierzu sowie die Verwendung des so erhaltenen Glases**
Method for suppressing the formation of oxygen bubbles in a glass melt, apparatus used therefor and application of the glass so obtained
Procédé pour réprimer la formation de bulles d' oxygène dans un bain de fusion de verre, appareil pour faire ceci et application de ce verre ainsi obtenu

(30) Priorität: 04.09.2000 DE 10043454
(43) Veröffentlichungstag der Anmeldung: 06.03.2002
(73) Patentinhaber: Schott AG, 55122 Mainz (DE)
(72) Erfinder: Hoyer, Patrick, Dr., 82194 Gröbenzell (DE); Krämer, Fritz, Dr., 55270 Klein-Winternheim (DE); Röth, Gernot, 55278 Dalheim (DE); Pfeiffer, Thomas, Dr., 55218 Ingelheim (DE); Duch, Klaus-Dieter, Dr., 65232 Taunusstein (DE); Ott, Franz Dr., 95666 Mittereich (DE)
(74) Vertreter: Fuchs Mehler Weiss & Fritzsche

(56) Entgegenhaltungen:
- EP-A- 1 101 740
- WO-A-98/18731
- DE-C- 4 207 059
- FR-A- 1 465 248
- F.G.K. BAUCKE ET AL.: J. NON-CRYS. SOLIDS, Bd. 84, Nr. 1-3, 1986, Seiten 174-182, XP001160961

## Beschreibung

Die Erfindung betrifft die Unterdrückung von Sauerstoffblasen an Edelmetallteilen, die bei der Glasherstellung mit der Glasschmelze in Kontakt treten, eine Vorrichtung hierzu sowie die Verwendung des mit diesem Verfahren erhaltenen Glases.

Beim Aufschmelzen der Ausgangsstoffe zur Herstellung von Glas laufen neben dem Schmelzvorgang auch chemische Reaktionen und physikalische Vorgänge ab. Dabei werden sowohl Kristallwasser als auch CO₂ und ggf. SO₂ freigesetzt, die sich so lange in der Glasschmelze lösen, bis deren Sättigung überschritten ist und sie als feine Gasbläschen ausgeschieden werden. Diese Gasbläschen werden dann im weiteren Verfahren entfernt, was beispielsweise beim chemischen Läutern dadurch geschieht, dass gasförmiger Sauerstoff erzeugt wird. Dieser steigt in Form von Gasbläschen in der niederviskosen Schmelze auf. In diesen Bläschen ist der Partialdruck an Gasen, die in der Schmelze entstehen, wie CO₂, CO, N₂, NOₓ gleich Null. Aus der Schmelze diffundieren nun die gelösten Gase in diese Sauerstoffblasen. Auch die durch Überschreiten der Sättigungsgrenze gebildeten feinen Gasbläschen aus den zuvorgenannten Gasen verschmelzen mit den erzeugten Sauerstoffblasen. Dadurch werden die Blasen größer und sind damit durch ihre kleine Oberflächenspannung gegenüber den kleineren Blasen energetisch im Vorteil. Aus diesem Grunde wird das Ungleichgewicht zwischen großen und kleinen Blasen immer ausgeprägter, bis die kleinen Blasen ihren gesamten Inhalt durch Diffusion abgegeben oder sich durch Blasenverschmelzung aufgelöst haben. Die großen Blasen steigen nun durch ihren erhöhten Auftrieb schnell auf und setzen ihren Inhalt in die Gasatmosphäre über der Schmelze frei. Dieser Vorgang wird auch als Entblasen oder Läutern bezeichnet.

Die beim Läutern durchaus gewünschte Entstehung von Sauerstoffblasen, die bei der in dieser Verfahrensstufe herrschenden geringen Viskosität der Schmelze leicht aufsteigen können, ist in anderen Verfahrensstufen der Glasherstellung jedoch unerwünscht. Kleine mikroskopische Blasen im Glas führen nämlich zu einem minderwertigen Endprodukt mit verschlechterten mechanischen und optischen Eigenschaften. Die Entstehung von Gasblasen ist insbesondere im sogenannten Abstehbereich der Glasherstellung und ganz besonders im Bereich von Speiserrinnen unerwünscht.

Darüber hinaus ist im Abstehbereich, insbesondere bei der Speiserrinne, die Dicke bzw. die Höhe der Glasschmelze nicht mehr so groß, so dass der am Boden der Schmelze herrschende hydrostatische Druck abnimmt, was ebenfalls zu einer Vergrößerung von eventuell vorhandenen Gasbläschen führt. In der DE-A-198 22 437 wird daher vorgeschlagen, von außen auf die Schmelze einen Druck auszuüben, um so kleine Blasen zu erdrücken.

Soweit Wasser im Glas löslich ist, wird es vollständig in das SiO₂-Netzwerk einer Glasschmelze in Form von OH-Gruppen und Wasserstoffbrückenbindungen eingebaut, wie dies beispielsweise bei H. Scholze, in *Glastechnische Berichte* 32, (1959), Seiten 142-152 beschrieben ist. In dieser gelösten Form bewirkt Wasser im wesentlichen keine nachteiligen Eigenschaften im fertigen Glasprodukt.

Das in den Glasschmelzen regelmäßig vorliegende Wasser ist bei den bei der Glasschmelze angewandten Verfahrenstemperaturen zum Teil in seine Bestandteile Wasserstoff und Sauerstoff aufgespalten. So beträgt der Anteil des aufgespaltenen Wassers bei einer Verfahrenstemperatur von 1500°C, beispielsweise 0,2 ‰.

Ein Großteil der heute üblichen Vorrichtungen zur Herstellung von Glas weisen mit Edelmetall, insbesondere mit Platin verkleidete Bauelemente, auf. Es hat sich gezeigt, dass gerade an diesen Edelmetallteilen, insbesonders in der Speiserrinne, eine unerwünschte O₂-Blasenbildung erfolgt. Ein theoretisches Modell hierzu ist beispielsweise von J. M. Cowan et. al. in *J. of the American Ceramic Society*, Vol 49 (1966), S. 559-562 beschrieben. Danach entsteht in einer Glasschmelze in Folge eines Temperaturgradienten eine elektrische Potentialdifferenz, deren Größenordnung, in Abhängigkeit der Zusammensetzung der Schmelze, etwa zwischen 30mV/100°C und 100mV/100°C liegt. Schließt man nun den heißen und den kalten Bereich mittels einer Brücke aus Platindraht kurz, so entstehen am Draht im hei-ßen Bereich Sauerstoffblasen. Diese Blasenbildung ist die Folge des durch den Platindraht fließenden Kurzschlußstroms. Neuere Untersuchungen bei Schott (F.G.K. Baucke, K. Mücke: "Measurement of standard Seebeck coefficients in nonisothermal glass melts by means of ZrO₂ elektrodes", J. Non-Chryst. Solids 84, 174 - 182 (1986) zeigten darüber hinaus, dass bei elektrischen Kurzschlüssen von nichtisothermen Schmelzen Sauerstoffblasen auch an der kälteren Elektrode auftreten können. Wo die Blasen auftreten, hängt ausschließlich von der Zusammensetzung der Schmelze ab.

Weitere Untersuchungen haben gezeigt, dass neben der obengenannten Elektrolyse durch kurzgeschlossene Thermospannungen zwei weitere Ursachen zur Sauerstoffblasenbildung führen, nämlich Wechselstromelektrolyse (gleichgerichtete Anteile des Heizwechselstroms) und die Zersetzung von in der Schmelze vorhandenem Wasser an der Grenzfläche Schmelze-Platin. Wobei der Schaden, der letzteren Effekt bewirkt, den aller anderen bei weitem übertrifft.

In der WO 98/18731 wird die Verhinderung von speziellen Sauerstoffblasen bei der Glasherstellung beschrieben, die durch die oben genannte thermische Zersetzung des in der Glasschmelze vorhandenen Wassers zu Sauerstoff und Wasserstoff und Abdiffusion des Wasserstoffs entstehen. Dabei wird die Blasenbildung dadurch vermieden, dass die Diffusion des Wasserstoffs durch glühende Platin- oder Molybdänwände verhindert wird, indem auf der Rückseite des Platins ein solch großer Wasserstoffpartialdruck aufgebaut wird, der ausreicht, ein Abwandern des gemäß der oben beschriebenen Zersetzungsreaktion gebildeten Wasserstoffs durch die Platinwand zu verhindern bzw. auszugleichen. Auf diese Weise soll verhindert werden, dass sich Sauerstoff, der die Platinauskleidung nicht durchdringen kann, in der Glasschmelze anreichert. Dieses Verfahren setzt jedoch aufwendige Umbaumaßnahmen voraus, da die entsprechenden Bereiche der Produktionsanlagen für Glas derart umgestaltet werden müssen, dass die Platinauskleidung mit einem wasserstoffhaltigen Gas spülbar ist. Dies bedeutet, dass die Platinteile mit einer Umhüllung versehen werden müssen, die bis ca. 350°C temperaturfest und luftdicht ist und die elektrisch isolierende Durchführungen für Thermoelemente sowie Stromschienen für die elektrische Beheizung der Platinbauteile enthalten muss. Dies zu realisieren ist technisch kompliziert und teuer.

In der DE-C-3 906 270 wird ein Verfahren zum Schmelzen von insbesondere reduzierendem Glas beschrieben, bei dem ein mit Platin ausgekleidetes Schmelzgefäß vor Korrosion dadurch geschützt werden kann, dass auf der Tiegelinnenseite eine schützende Glasschicht, die reich an Sauerstoff ist, erzeugt wird, indem die glasabgewandte Seite des Tiegels mit Sauerstoff gespült wird. Diese Lehre beruht auf der Erkenntnis von L. R. Velho und R. W. Bartlett in *Metallurg. Trans.* 3 (1972) 65 sowie R. J. Brook et al. in *J. Electrochem. Soc.* 118 (1971) 185, wonach Sauerstoff bei erhöhten Temperaturen und bei ausreichend hohem Sauerstoffpartialdruck eine Platinwand in beträchtlichem Ausmaße durchdringen kann. Nach den Erkenntnissen der vorliegenden Erfindung beruht dieses Verfahren mit Sicherheit nicht auf der Sauerstoffdiffusion durch Platin, sondern auf der Sauerstoffanreicherung durch Abdiffusion von Wasserstoff durch die Platinwand.

In der weiteren nicht vorveröffentlichten Patentanmeldung DE 199 55 827 (A1) (EP 1 101 740) des gleichen Anmelders, wird gelehrt, dass sich eine Sauerstoffblasenbildung verhindern läßt, wenn zwischen der Edelmetallauskleidung bzw. dem Edelmetallteil, an der eine Sauerstoffblasenbildung unerwünscht ist und einer in einem anderen Bereich in die Glasschmelze eintauchenden Elektrode ein Potentialgefälle erzeugt wird. Dies geschieht vorzugsweise mittels einer Gleichspannungsquelle, wobei das Edelmetallteil bzw. - auskleidung mit dem Minuspol und die Elektrode mit dem Pluspol verbunden ist.

Die Erfindung hat zum Ziel, ein weiteres verbessertes Verfahren zur Vermeidung der üblicherweise nicht elektrisch induzierten O₂-Blasenbildung bereitzustellen, sowie eine Vorrichtung mit der dieses Verfahren durchgeführt werden kann. Darüber hinaus hat die Erfindung zum Ziel, verbesserte Glasprodukte bereitzustellen, die unter Verwendung des erfindungsgemäßen Verfahrens bzw. der Vorrichtung erhalten werden.

Dieses Ziel wird mit den in den Ansprüchen definierten Merkmalen erreicht.

Es wurde nämlich erfindungsgemäß gefunden, dass sich die Bildung von Sauerstoffblasen an Metallteilen, insbesondere an Edelmetallteilen der Gefäßauskleidungen insbesondere im Abstehbereich unterdrücken bzw. ganz vermeiden läßt, wenn man in einem Bereich der Glasschmelze, in dem ein niedrigerer Sauerstoffpartialdruck herrscht als in dem Bereich, in dem die Sauerstoffblasenbildung vermieden werden soll, eine Elektrode eintaucht und diese Elektrode mit der Metall- insbesondere der Edelmetallauskleidung des Bereiches, in dem die Sauerstoffblasenbildung unerwünscht ist, elektrisch leitend verbindet bzw. kurzschließt. Mit der erfindungsgemäßen Vorgehensweise wird die Sauerstoffblasenbildung dadurch unterdrückt, indem der vorliegende gelöste, zur Gasblasenbildung neigende molekulare Sauerstoff gemäß der Gleichung

O₂ + 4e → 2O²⁻

in Sauerstoffionen umgewandelt wird, wobei sich die entstehenden Sauerstoffionen in nahezu beliebigen Mengen in der Schmelze lösen. Dabei wird unabhängig von seiner Entstehungsursache sämtlicher zur Blasenbildung neigender Sauerstoff beseitigt.

Vorzugsweise taucht dabei die Elektrode in einem Bereich ein, in dem Sauerstoffgasblasen unschädlich sind, beispielsweise im Einschmelzbereich oder auch in der Läuterkammer. In einer bevorzugten Ausführungsform ist die Elektrode besonders nahe an der Oberfläche der Glasschmelze angeordnet, so dass eventuelle dort entstehende Sauerstoffgasblasen nur einen kurzen Aufstieg zur Glasoberfläche haben und dort freigesetzt werden oder dass sie sich an der Oberfläche ansammeln und mechanisch abgestreift werden können. In einer besonders bevorzugten Ausführungsform ist die Elektrode ein in der Anlage vorhandenes Bauteil, wie beispielsweise eine Wanne, ein Stab, Rohr, Rührelement, Nadeln, Heizelektroden, Düsen und Schieber.

Die elektrisch leitende Verbindung von Metall- insbesondere Edelmetallauskleidung und Elektrode ist üblicherweise ein gut leitendes Elektrokabel mit geringem Ohm'schen Widerstand. Es ist von den übrigen Bauteilen,
die mit der Schmelze in Kontakt stehen, elektrisch isoliert. In besonderen Fällen ist es jedoch auch möglich Bauteile der Glasherstellungsanlage als elektrisch leitende Verbindung zu verwenden, sofern dies nicht zu Kurzschlüssen im System führt und sofern diese Bauteile außer über Elektrode und Metall- bzw. Edelmetallauskleidung keinen elektrischen Kontakt mit der Schmelze aufweisen.

Auf der der Glasschmelze zugewandten Seite ist die Elektrode mit einem Metall, vorzugsweise mit einem Edelmetall verkleidet. Vorzugsweise weist die in die Schmelze eingetauchte Metallverkleidung der Elektrode eine Fläche auf, die mindestens 25 % der Kontaktfläche von Glasschmelze und Metallauskleidung des Teils beträgt, an dem die Sauerstoffblasenbildung vermieden werden soll. Obwohl das Metall der Elektrodenverkleidung üblicherweise das gleiche Metall ist wie dasjenige des Teils an dem die O₂-Bildung unerwünscht ist, so hat es sich in einigen Fällen als sinnvoll erwiesen, das Elektrodenpotential durch die Wahl eines anderen geeigneten Metalls, insbesondere Edelmetalls zu verändern.

Die Metallauskleidung, an der die Sauerstoffblasenbildung unterdrückt werden soll, ist elektrisch von anderen Metallteilen isoliert, und zwar insbesondere von solchen Metallteilen, bei denen ein höherer Sauerstoffpartialdruck herrscht. Zweckmäßige isolierte Bereiche sind insbesondere der Läuterbereich, Rinne(n), der Einschmelzbereich. Darüber hinaus weist die Stelle, an der die Gasblasenbildung verhindert werden soll, d. h. die Metallauskleidung sowie die darin enthaltene Glasschmelze üblicherweise eine geringere Temperatur auf als die Elektrode sowie die diese umgebende Glasschmelze.

Die Elektrode ist insbesonders als Hohlkörper ausgestaltet, wobei sich die glasabgewandte Seite der Metallverkleidung mit einem reduzierenden Gas spülen läßt. Bevorzugte reduzierende Gase sind Wasserstoff, Wasserdampf, Formiergas oder deren Mischungen untereinander, oder mit Luft oder einem inerten Gas wie Stickstoff oder ein Edelgas. Vorzugsweise ist die Dicke der Metallverkleidung relativ dünn und beträgt üblicherweise 0,1 bis 20 mm, wobei 0,5 bis 1,5 mm besonders bevorzugt ist.

Bevorzugte Metalle für die Ver- bzw. Auskleidung der Elektrode und/oder der Metallauskleidung, an der die Sauerstoffblasenbildung unerwünscht ist, sind Edelmetalle sowie alle Metalle der Platingruppe, insbesondere Platin selbst sowie Gold, Rhenium, Molybdän, Wolfram sowie Legierungen hiervon.

Die Spülung der Elektrode mit reduzierenden Gasen kann mit beliebigen Gasdrucken durchgeführt werden, vorzugsweise wird jedoch mit einem Druck von 1 bzw. 1,001 bis 5 bar, insbesondere von 1,05 bis 1,5 bar beaufschlagt. Bevorzugte Durchsatzmengen betragen 0,01 bis 200 1/min, insbesondere 0,1 bis 2 l/min je Elektrode.

Es hat sich gezeigt, dass solche Begasungsanlagen üblicherweise eine merkliche Leckrate an Wasserstoff aufweisen, die üblicherweise wesentlich höher ist als der eigentliche Verbrauch an Wasserstoff für den erfindungsgemäßen Zweck. Aus diesem Grunde ist es notwendig, das Spülgas überzudosieren, wobei die Durchsatzmenge zu dem im Inneren herrschenden Wasserstoffpartialdruck für eine Anlage eingestellt wird.

Wird Wasserstoff verwendet, so beträgt die Konzentration des Wasserstoffes am gesamten Gas 0,001 bis 50 %, vorzugsweise 0,01 bis 2 %. In vielen Fällen hat es sich als ausreichend erwiesen, wenn die glasabgewandte innere Seite der Metallauskleidung der Elektrode nur mit einem erhöhten Partialdruck des reduzierenden Gases beaufschlagt wird. Eine permanente Spülung der Elektrodeninnenseite ist nur notwendig, um die Leckverluste auszugleichen.

Erfindungsgemäß wurde auch gefunden, dass eine nicht elektrisch induzierte O₂-Blasenbildung nur dann an Edelmetallteilen unterbleibt, wenn das Glas wasserfrei oder zumindest nahezu wasserfrei ist, d.h. dass es keine oder nur minimale Mengen an Wassermolekülen gelöst enthält und zwar auch keine Wassermoleküle, die als OH-Gruppen in das SiO₂ Netzwerk des Glases eingebaut sind, wie dies in der oben zitierten Arbeit von Scholz beschrieben ist.

Allerdings entstehen auch Sauerstoffblasen durch Elektrolyse der Glasschmelze selbst, da in den Schmelzwannen zum Teil beachtliche durch elektrische Zusatzheizung, Thermospannungen zwischen den Wannenteilen mit unterschiedlicher Temperatur oder durch Konzentrationsdifferenzen erzeugte Ströme fließen. Die so erzeugten Sauerstoffmoleküle liegen gelöst als fertiges O₂-Gas in der Schmelze vor.
Auch in solchen Fällen hat sich die erfindungsgemäße Anordnung als wirksam erwiesen, die Sauerstoffblasenbildung zu unterdrücken.

Der Bereich, in dem die Glasblasen vermieden werden sollen, ist von anderen Metall- bzw. Edelmetallausgekleideten Bereichen der Glasschmelzanlage elektrisch isoliert, ausgenommen natürlich die Verbindung zur Elektrode. Auch die Elektrode selbst ist von der Edelmetallverkleidung der Schmelzwanne zweckmäßigerweise isoliert.

In einer besonders bevorzugten erfindungsgemäßen Ausführungsform wird der Sauerstoff-Partialdruck in der Glasschmelze direkt gemessen. Derartige Messungen sind beispielsweise mit Sonden durchführbar wie sie von Th. Frey und F.G.K. Baucke et al. in *Glastechn.Ber.* 53 (1980) Seiten 116-123 beschrieben sind. In einer besonders bevorzugten Ausführungsform wird der mittels einer solchen Sonde gemessene O₂-Partialdruck bzw. das dabei erzeugte Signal direkt zur Regelung und Kontrolle der für die benötigten Gasmengen bzw. Partialdrücke an reduzierenden Gasen beim Spülen der Elektrode benützt. Dabei wird der Sauerstoff-Partialdruck vorzugsweise in dem Bereich gemessen, in dem die Sauerstoffbildung unterdrückt werden soll. In Einzelfällen ist es jedoch auch möglich den Sauerstoffdruck und damit die Steuerung der Gasspülung durch Messen des O₂-Partialdrucks im Bereich der Elektrode zu steuern. Ganz besonders bevorzugt ist es, sowohl den Sauerstoff-Partialdruck in dem Bereich zu messen, in dem der Sauerstoff unerwünscht ist als auch im Bereich der Elektrode selbst. Auf diese Weise lassen sich gezielt Spannungspotentiale erzeugen, wodurch eine rasche Steuerung des Sauerstoffgehaltes und damit der O₂-Blasenbildung im fertigen Glas möglich ist.

Das mittels dem erfindungsgemäßen Verfahren bzw. der erfindungsgemäßen Glasschmelzvorrichtung hergestellte Glas eignet sich besonders zur Verwendung als Monitore, LCDs, TFTs, Fernsehbildschirmen, optischen Linsen, Haushaltsgeräten wie Kochgeschirr, Mikrowellengeschirr, Kochfeldern, elektronischen Geräten, Fensterglas, Lampengläsern und Displaygläsern.

Die Erfindung soll durch die folgenden Beispiele näher erläutert werden. Es zeigen
- Figur 1: eine erfindungsgemäße Vorrichtung zur Herstellung von Glas mit einer die Bildung von Sauerstoffblasen unterdrückenden Einrichtung,
- Figur 2: eine einfache Ausgestaltung einer Elektrode und
- Figur 3: einen Rührer, der als Elektrode zur Verwendung im erfindungsgemäßen Verfahren ausgestaltet ist.

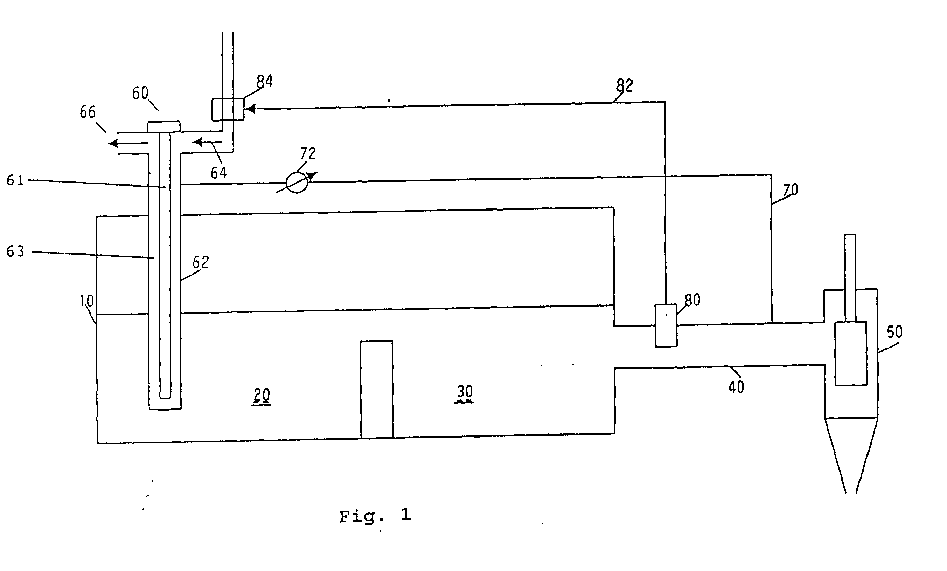

In einer erfindungsgemäßen Vorrichtung gemäß Figur 1, die eine vorzugsweise mit Edelmetall ausgekleidete Schmelzwanne 10 mit einer darin vorliegenden Glasschmelze 20 sowie ggf. einen Abstehbereich 30 umfasst, wird die Glasschmelze 20 über die Speiserrinne 40 zu einem Rührtiegel 50 geleitet, wo das geschmolzene Glas aus der Vorrichtung ausgetragen wird. In die Glasschmelze 20 taucht eine mit Gas gespülte Elektrode 60 mit einer einen Elektrodenkern 61 verkleidenden Platinhaut 62 ein. Die Außenfläche der Platinhaut 62 steht mit der Schmelze in direktem "benetzten" Kontakt. Die Platinhaut 62 ist vom Elektrodenkern 61 beabstandet angeordnet, so dass ein mit Gas spülbarer Zwischenraum 63 entsteht, der mit einer Gaszuleitung 64 und einer Gasableitung 66 in fluider Kommunikation steht. Die Speiserrinne 40 und die mit Gas beaufschlagte Elektrode 60 sind mittels einer elektrischen Leitung 70 verbunden bzw. kurzgeschlossen. Gegebenenfalls kann die zwischen der Elektrode 60 und Speiserrinne 40 auftretende EMK mittels eines Detektors 72 bestimmt werden.

Im Bereich der Speiserrinne 40 taucht eine Sonde 80 zur Messung des Sauerstoff-Partialdruckes in die Schmelze ein. Die Sonde ist mittels einer Leitung 82 mit einem Regulator 84 der Gaszuführleitung 64 verbunden. Der Regulator 84 regelt gemäß dem von der Sonde 80 gemessenen Sauerstoff-Partialdruck die Gaszufuhr der Leitung 64, wodurch sich die zwischen Speiserrinne 40 und Elektrode 60 gebildete EMK online steuern lässt. Prinzipiell ist es auch möglich, die Wasserstoffzufuhr direkt mittels der vom Detektor 72 bestimmten EMK online zu regeln.

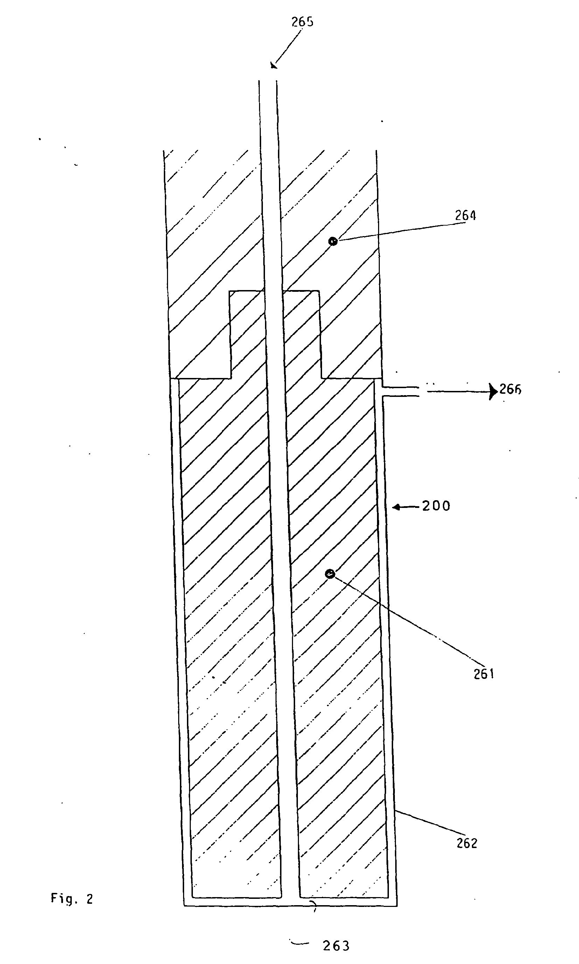

Figur 2 zeigt eine Ausführungsform einer mit Gas beaufschlagbaren Elektrode 200. Sie umfasst einen Elektrodenhalter 264, der üblicherweise nicht in die Glasschmelze 20 eintaucht, sowie einen aus Keramik oder Metall bestehenden Elektrodenkern 261. Der Elektrodenkern 261 ist außen gegenüber der Glasschmelze 20 mit einer beabstandeten Edelmetallhülle 262 insbesondere einer Platinmetallhaut verkleidet, wobei der Abstand groß genug ist, dass er mit Gas spülbar ist. Durch Elektrodenhalter 264 und Kern 261 verläuft eine Gaseintragsleitung 265, die in dem zwischen beabstandeter Edelmetallhülle 262 und Kern 261 gebildeten Gasraum 263 endet. Im oberen Teil des Gasraumes 263 ist ein Gasaustrag 226 angeordnet. Der Gasaustrag 266 kann sowohl seitlich angeordnet sein als auch als Austragsleitung durch den Elektrodenhalter 264 ausgebildet sein.

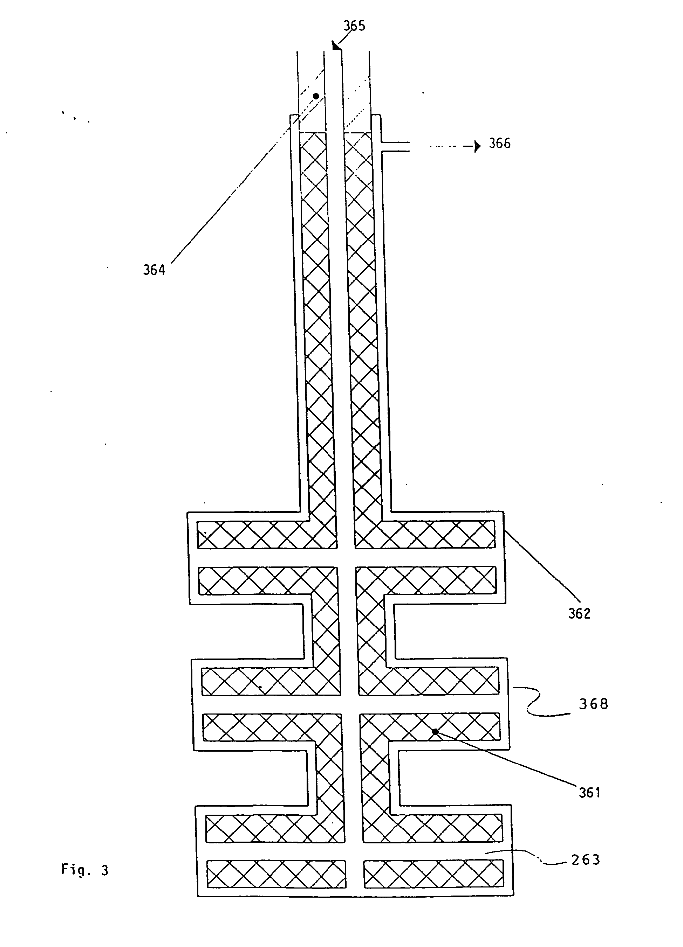

Figur 3 zeigt einen als Elektrode wirkenden gasspülbaren Rührer 300. Der Rührer 300 umfasst einen Halter 364 sowie ein daran anschließendes Rührteil 368, welches einen mit Gaszufuhrleitungen 365 versehenen, Metall- oder Keramikkern 361 umfasst, sowie seitwärts erstreckende Rührflügel 368. Das Rührteil 368 ist an seiner Außenseite vollständig von einer beabstandeten Edelmetallhülle 362 umgeben, wobei der zwischen Rührkern 361 und Edelmetallhülle 362 gebildete Zwischenraum 363 mit der Gaszufuhr 365 in fluider Kommunikation steht. Am oberen Ende des Rührteils 368 befindet sich ein Gasaustrag 366 zur Ableitung der verbrauchten Gase bzw. der Reaktionsprodukte.

Es hat sich gezeigt, dass sich mit dem erfindungsgemäßen Verfahren bzw. der Vorrichtung auf einfache Weise besonders hochwertige Gläser herstellen lassen.

## Patentansprüche

1. Verfahren zur Herstellung von Glas durch Bilden einer Glasschmelze (20) in einer Schmelzvorrichtung (10), die in einem ersten Bereich mit einem hohen Sauerstoffpartialdruck mindestens ein eine Metalloberfläche enthaltendes Teil (40) aufweist, dessen Metalloberfläche mit der Glasschmelze (20) in Kontakt steht, wobei an der Kontaktfläche eine Sauerstoffblasenbildung in der Glasschmelze (20) unterdrückt wird, **dadurch gekennzeichnet, dass** in einem zweiten Bereich der Glasschmelze (20), in dem ein geringerer O₂-Partialdruck herrscht oder erzeugt wird als bei der Kontaktfläche (40), an der die Sauerstoffblasenbildung unterdrückt werden soll, eine Elektrode (60) eingetaucht wird, die an ihrer der Glasschmelze (20) zugewandten Seite (62) mit einem Metall verkleidet ist, Elektrode (60) und Metallteil (40) elektrisch leitend verbunden wird und die Metalloberfläche (40), an der die Sauerstoffblasenbildung unterdrückt werden soll, von den Metallteilen, bei denen ein höherer Sauerstoffpartialdruck herrscht, isoliert wird.

2. Verfahren nach Anspruch 1, **dadurch gekennzeichnet, dass** der in der Umgebung der Elektrode (60), in der Schmelze (20) herrschende Sauerstoffpartialdruck gezielt verringert wird.

3. Verfahren nach Anspruch 1 oder 2, **dadurch gekennzeichnet, dass** der in unmittelbarer Umgebung der Elektrode (60) herrschende Sauerstoffpartialdruck **dadurch** verringert wird, dass man eine mit Gas beaufschlagbare spülbare Elektrode (60, 61, 62, 63, 64) verwendet und diese mit einem reduzierenden Gas und/oder Gasgemisch beaufschlagt.

4. Verfahren nach einem der vorhergehenden Ansprüche, **dadurch gekennzeichnet, dass** man als reduzierendes Gas Wasserstoff, Wasserdampf, Formiergas verwendet, sowie deren Mischungen untereinander, sowie mit Luft oder einem inerten Gas wie Stickstoff oder einem Edelgas.

5. Verfahren nach einem der vorhergehenden Ansprüche, **dadurch gekennzeichnet, dass** man den Sauerstoffpartialdruck der Schmelze (20, 30) mittels einer Sonde (80) misst und mit dem dabei erzeugten Signalwert den zum Spülen der Elektrode (60) notwendigen Partialdruck an reduzierendem Gas regelt.

6. Verfahren nach einem der vorhergehenden Ansprüche, **dadurch gekennzeichnet, dass** das Glas zu Monitoren, LCDs, TFTs, Fernsehbildschirmen, optischen Linsen, Haushaltsgeräten wie Kochgeschirr, Mikrowellengeschirr, Kochfeldern, elektronischen Geräten, Fenstergläsern, Lampengläsern und Displaygläsern weiterverarbeitet wird.

7. Vorrichtung zur Herstellung von Glas aus seiner Schmelze (20) umfassend eine Einrichtung zum Unterdrücken von O₂-Blasenbildung an Metallteilen (40), die mit der Schmelze (20) in Kontakt stehen, **dadurch gekennzeichnet, dass** die Einrichtung eine gasspülbare, metallverkleidete Elektrode (60) umfasst, die beim Betrieb in einem Bereich der Schmelze (20) angeordnet ist, in dem zumindest in unmittelbarer Umgebung der Elektrode (60) ein niedrigerer Sauerstoffpartialdruck herrscht als in dem Bereich, in dem das Metallteil (40) mit der Glasschmelze (20) in Kontakt steht, wobei die Elektrode (60) und das Metallteil (40) durch eine elektrische Leitung (70) kurzgeschlossen sind und die Metalloberfläche (40), an der beim Betrieb die Sauerstoffblasenbildung unterdrückt werden soll, von den Metallteilen, bei denen beim Betrieb ein höherer Sauerstoffpartialdruck herrscht, isoliert ist.

8. Vorrichtung nach Anspruch 7, **dadurch gekennzeichnet, dass** die Elektrode (60) als Hohlkörper ausgebildet ist, der eine elektrisch gut leitende Hülle (62) aufweist, deren glasabgewandte Rückseite mit reduzierenden Stoffen und/oder Gasen beaufschlagbar oder spülbar ist.

9. Vorrichtung nach einem der Ansprüche 7 - 8, **dadurch gekennzeichnet, dass** die Elektrode (60) ein Rührer, eine Nadel, eine Düse, ein Schieber und/oder ein Heizelement ist.

10. Vorrichtung nach einem der Ansprüche 7 - 9, **dadurch gekennzeichnet, dass** die Dicke der Metallverkleidung 0,1 bis 20 mm beträgt.

11. Vorrichtung nach einem der Ansprüche 7 - 10, **dadurch gekennzeichnet, dass** die Metallverkleidung aus Edelmetallen, Metallen der Platingruppe, Gold, Wolfram, Rhenium, Molybdän und/oder Legierungen davon gebildet ist.

12. Vorrichtung nach einem der Ansprüche 8 - 11, **dadurch gekennzeichnet, dass** diese eine Sonde (80) zum Messen des Sauerstoffpartialdruckes der Schmelze (20) umfasst, welche mit einem Steuerelement (84) kommuniziert, das beim Betrieb den Partialdruck der Gaszuführung regelt.

## Claims

1. Method for producing glass by forming a glass melt (20) in a melting apparatus (10), which has in a first region, with a high oxygen partial pressure, at least one part (40) including a metal surface, the metal surface of which is in contact with the glass melt (20), formation of oxygen bubbles in the glass melt (20) being suppressed at the contact surface, **characterized in that**, in a second region of the glass melt (20), in which a lower O₂ partial pressure prevails or is produced than for the contact surface (40) at which the formation of oxygen bubbles is to be suppressed, there is immersed an electrode (60), which is clad with a metal on its side (62) facing the glass melt (20), the electrode (60) and the metal part (40) are connected in an electrically conducting manner and the metal surface (40) at which the formation of oxygen bubbles is to be suppressed is insulated from the metal parts for which a higher oxygen partial pressure prevails.

2. Method according to Claim 1, **characterized in that** the oxygen partial pressure prevailing in the melt (20) is specifically reduced in the vicinity of the electrode (60).

3. Method according to Claim 1 or 2, **characterized in that** the oxygen partial pressure prevailing in the direct vicinity of the electrode (60) is reduced by using an electrode (60, 61, 62, 63, 64) which can be subjected to and flushed by gas and subjecting the said electrode to a reducing gas and/or gas mixture.

4. Method according to one of the preceding claims, **characterized in that** hydrogen, water vapour, forming gas and their mixtures with one another and with air or an inert gas such as nitrogen or a noble gas are used as the reducing gas.

5. Method according to one of the preceding claims, **characterized in that** the oxygen partial pressure of the melt (20, 30) is measured by means of a probe (80) and the partial pressure on reducing gas that is necessary for flushing the electrode (60) is controlled with the signal value thereby generated.

6. Method according to one of the preceding claims, **characterized in that** the glass is further processed for monitors, LCDs, TFTs, television screens, optical lenses, household items such as cooking pots or dishes, microwave dishes, hobs, electronic equipment, glasses for windows, lamps and displays.

7. Apparatus for producing glass from its melt (20), comprising a device for suppressing the formation of O₂ bubbles on metal parts (40) which are in contact with the melt (20), **characterized in that** the device comprises a gas-flushable, metal-clad electrode (60), which during operation is arranged in a region of the melt (20) in which a lower oxygen partial pressure prevails, at least in the direct vicinity of the electrode (60), than in the region in which the metal part (40) is in contact with the glass melt (20), the electrode (60) and the metal part (40) being short-circuited by an electric lead (70) and the metal surface (40) at which the formation of oxygen bubbles is to be suppressed during operation being insulated from the metal parts for which a higher oxygen partial pressure prevails during operation.

8. Apparatus according to Claim 7, **characterized in that** the electrode (60) is formed as a hollow body which has a shell (62) of good electrical conduction, the rear side of which, facing away from the glass, can be subjected to or flushed with reducing substances and/or gases.

9. Apparatus according to one of Claims 7 - 8, **characterized in that** the electrode (60) is a stirrer, a needle, a nozzle, a slide and/or a heating element.

10. Apparatus according to one of Claims 7 - 9, **characterized in that** the thickness of the metal cladding is 0.1 to 20 mm.

11. Apparatus according to one of Claims 7 - 10, **characterized in that** the metal cladding is formed from high-grade metals, metals of the platinum group, gold, tungsten, rhenium, molybdenum and/or alloys thereof.

12. Apparatus according to one of Claims 8 - 11, **characterized in that** it comprises a probe (80) for measuring the oxygen partial pressure of the melt (20), which probe communicates with a control element (84) which controls the partial pressure of the gas supply during operation.

## Revendications

1. Procédé de fabrication de verre par formation d'un bain (20) de verre fondu dans un dispositif de fusion (10) dont une première partie à haute pression partielle d'oxygène présente au moins une pièce (40) qui contient une surface métallique et dont la surface métallique est en contact avec le bain (20) de verre fondu, la formation de bulles d'oxygène dans le bain (20) de verre fondu étant inhibée sur la surface de contact, **caractérisé en ce qu'**une électrode (60) revêtue d'un métal sur son côté (62) tourné vers le bain (20) de verre fondu est immergée dans une deuxième partie du bain (20) de verre fondu dans laquelle la pression partielle d'O₂ qui règne ou est créée est plus basse que sur la surface de contact (40) sur laquelle la formation de bulles d'oxygène doit être inhibée, l'électrode (60) et la pièce métallique (40) étant reliées l'une à l'autre de manière électriquement conductrice et la surface métallique (40) sur laquelle la formation de bulles d'oxygène doit être inhibée étant isolée des parties métalliques sur lesquelles règne une plus haute pression partielle d'oxygène.

2. Procédé selon la revendication 1, **caractérisé en ce que** la pression partielle d'oxygène qui règne dans le bain fondu (20) est diminuée de manière contrôlée dans l'environnement de l'électrode (60).

3. Procédé selon la revendication 1 ou 2, **caractérisé en ce que** la pression partielle d'oxygène qui règne dans l'environnement immédiat de l'électrode (60) est diminuée en utilisant une électrode (60, 61, 62, 63, 64) qui peut être balayée par du gaz et en balayant cette électrode par un gaz réducteur et/ou un mélange de gaz réducteurs.

4. Procédé selon l'une quelconque des revendications précédentes, **caractérisé en ce que** comme gaz réducteur, on utilise de l'hydrogène, de la vapeur d'eau, du gaz de reformage ou leurs mélanges ainsi que leurs mélanges avec de l'air ou un gaz inerte tel que l'azote ou un gaz rare.

5. Procédé selon l'une quelconque des revendications précédentes, **caractérisé en ce que** l'on mesure la pression partielle d'oxygène dans le bain fondu (20, 30) au moyen d'une sonde (80) et **en ce que** l'on régule la pression partielle en gaz réducteur nécessaire pour le balayage de l'électrode (60) à l'aide de la valeur du signal créé par cette sonde.

6. Procédé selon l'une quelconque des revendications précédentes, **caractérisé en ce que** le verre est transformé en écrans, en affichages à cristaux liquides, en TFT, en écrans de télévision, en lentilles optiques, en ustensiles ménagers tels que des casseroles, de la vaisselle pour micro-ondes, des plaques de cuisson, des appareils électroniques, des verres de fenêtre, des verres de lampe et des verres d'affichage.

7. Dispositif de fabrication de verre à partir d'un bain fondu (20), qui comprend un dispositif d'inhibition de la formation de bulles d'O₂ sur des pièces métalliques (40) qui sont en contact avec le bain fondu (20), **caractérisé en ce que** le dispositif comprend une électrode (60) revêtue de métal et balayable par un gaz et qui, en fonctionnement, est disposé dans une partie du bain fondu (20) dans laquelle la pression partielle d'oxygène qui règne au moins dans l'environnement immédiat de l'électrode (60) est plus basse que dans la partie dans laquelle la pièce métallique (40) est en contact avec le bain (20) de verre fondu, l'électrode (60) et la pièce métallique (40) étant mises en court-circuit par un conducteur électrique (70) et la surface métallique (40) sur laquelle la formation de bulles d'oxygène doit être inhibée en fonctionnement étant isolée des pièces métalliques sur lesquelles une pression partielle d'oxygène plus élevée règne en fonctionnement.

8. Dispositif selon la revendication 7, **caractérisé en ce que** l'électrode (60) est configurée comme corps creux qui présente une enveloppe (62) bonne conductrice de l'électricité et dont le côté arrière non tourné vers le verre peut être sollicité ou balayé par des substances et/ou des gaz à action réductrice.

9. Dispositif selon l'une quelconque des revendications 7 à 8, **caractérisé en ce que** l'électrode (60) est un agitateur, une aiguille, un ajutage, un poussoir et/ou un élément chauffant.

10. Dispositif selon l'une quelconque des revendications 7 à 9, **caractérisé en ce que** l'épaisseur du revêtement métallique est comprise entre 0,1 et 20 mm.

11. Dispositif selon l'une quelconque des revendications 7 à 10, **caractérisé en ce que** le revêtement métallique est formé de métaux précieux, de métaux du groupe du platine, de l'or, du tungstène, du rhénium, du molybdène et/ou de leurs alliages.

12. Dispositif selon l'une quelconque des revendications 8 à 11, **caractérisé en ce qu'**il comprend une sonde (80) de mesure de la pression partielle d'oxygène dans le bain fondu (20), laquelle sonde communique avec un élément de commande (84) qui régule en fonctionnement la pression partielle de l'apport de gaz.
